# EUROPÄISCHE PATENTSCHRIFT

(11) **EP 0 654 422 B1**
(45) Veröffentlichungstag und Bekanntmachung des Hinweises auf die Patenterteilung: **16.07.1997**
(21) Anmeldenummer: 94117979.8
(22) Anmeldetag: 15.11.1994
(51) Int. Cl.: B65D 88/68, G01G 13/20, B65G 65/46

(54) **Vorrichtung zum Dosieren von pulverförmigem Schüttgut, insbesondere von Farbstoffpulver**
Device for dosing powdery bulk material, particularly of dye in powder form
Dispositif de dosage de produit en vrac en poudre, en particulier de couleur en poudre

(30) Priorität: 24.11.1993 DE 4339974
(43) Veröffentlichungstag der Anmeldung: 24.05.1995
(73) Patentinhaber: BASF AKTIENGESELLSCHAFT, 67056 Ludwigshafen (DE)
(72) Erfinder: Schmaltz, Claus, D-76726 Germersheim (DE); Queitsch, Manfred, D-67112 Mutterstadt (DE)

(56) Entgegenhaltungen:
- DE-A- 3 425 592
- DE-B- 1 218 354
- DE-U- 8 907 380
- FR-A- 2 607 794
- US-A- 1 331 017
- US-A- 2 042 739

## Beschreibung

Die Erfindung betrifft eine Vorrichtung zum Dosieren von pulverförmigem Schüttgut, insbesondere von Farbstoffpulver, mit einem Vorratsbehälter für das Schüttgut, der in seinem unteren Bereich eine verschließbare Auslaßöffnung hat, und einem in dem Vorratsbehälter angeordneten, einseitig auf der Seite eines Motors eingespannten, drehantreibbaren Rührorgan.

Eine Vorrichtung dieser Art ist aus der DE-A-41 16 616 bekannt. Dabei ist das Rührorgan als gegenüber ihrer Einspannstelle federnd auslenkbare Schraubenfeder ausgebildet, die durch den Vorratsbehälter hindurchgreift und bis zur Auslaßöffnung reicht. Der Motor ist im Bereich des Behältermantels angeordnet, so daß bei konischem Vorratsbehälter die Schraubenfeder mit dem Neigungswinkel des Konus ausgerichtet ist. Hierdurch kann zwar ein Zusammenbacken des Schüttgutes und damit eine Brückenbildung vermieden werden, eine direkte und genaue Dosierung sehr kleiner Schüttgutmengen ist indes aufgrund der federnden Eigenschaften der Schraubenfeder nicht gewährleistet.

Weiterhin beschreibt die DE-A-41 31 403 eine Dosiervorrichtung für pulverförmiges Schüttgut mit einem Aufgabetrichter, einem daran anschließenden Schieberschacht mit einer untenliegenden Auslaßöffnung sowie mit einem Verschlußschieber zum Verschließen bzw. Freigeben der Auslaßöffnung, wobei der Verschlußschieber gegenüber der Horizontalebene geneigt angeordnet ist. Bei dieser Vorrichtung wird vorausgesetzt, daß das Schüttgut im Trichter und im Bereich des Verschlußschiebers ein regelmäßiges Fließverhalten aufweist. Das Dosieren wird alleine durch das Öffnen des Verschlußschiebers aktiviert. Für eine exakte Feindosierung sind jedoch zusätzliche technische Hilfsmittel, beispielsweise eine Einheit für die automatische Steuerung der Schieberbewegungen und ein besonderer Aktivator erforderlich.

Der Erfindung liegt die Aufgabe zugrunde, eine Vorrichtung der eingangs genannten Art zu schaffen, mit der einerseits die Genauigkeit der Dosierung verbessert werden kann und die andererseits von der Rheologie der zu dosierenden Schüttgüter weitgehend unabhängig ist. Als Besonderheit ist zusätzlich gefordert, daß die Vorrichtung einen häufigen, einfach und schnell durchzuführenden Wechsel von zu dosierendem Schüttgut zuläßt.

Für eine Lösung dieser Aufgabe besteht ein großer Bedarf, beispielsweise beim Dosieren von Farbstoffpulver, da ein Überschreiten einer vorgeschriebenen Dosis die Prüfreproduzierbarkeit von Färbesystemen nachteilig beeinflußt und damit eine coloristische Bewertung praktisch unmöglich macht.

Zur Lösung der Aufgabe werden die Maßnahmen nach dem Kennzeichen des Anspruchs 1 vorgeschlagen. Zweckmäßige Weiterbildungen der Vorrichtung sind Gegenstand der Unteransprüche 2 bis 6.

Die erfindungsgemäße Vorrichtung zeichnet sich durch einen besonders ausgebildeten unteren Bereich des Vorratsbehälters sowie die besondere Form und Anordnung des Rührorgans aus. Der Vorratsbehälter besteht aus mindestens zwei Rohrzügen, von denen wenigstens ein Rohrzug konisch ausgebildet ist und besitzt ein zentrales Rührorgan. Dem Rührorgan wird neben seiner Drehbewegung eine zusätzliche Bewegung in axialer Richtung aufgezwungen, wodurch die Entstehung von Materialbrücken vermieden wird und ein exaktes Dosieren von Schüttgut gewährleistet ist. Es ist jedoch auch möglich, den Vorratsbehälter relativ zum Rührorgan auf- und abzuwegen. Die mit der Vorrichtung erreichbare hohe Dosiergenauigkeit von ca. 10⁻³ g läßt sich auch beim Dosieren kleinster Schüttgutmengen einhalten. Sie ist zudem weitgehend unabhängig von der Rheologie des Schüttgutes.

Erreicht wird dies dadurch, daß der untere Bereich des Vorratsbehälters aus einem Rohr besteht, in dem eine Schraubenwelle geführt ist, wobei die freie Stirnfläche des Rohres gegenüber der Horizontalebene geneigt ist. Im allgemeinen beträgt der Neigungswinkel 3° bis 70°, vorzugsweise 20° bis 50°. Die drehantreibbare Schraubenwelle ist einseitig auf der Seite eines am Kopf des Vorratsbehälters befindlichen Motors eingespannt. Sie greift durch das Rohr bzw. durch die Auslaßöffnung in der geneigten Stirnfläche hindurch und trägt auf ihrem freien Ende eine an der Stirnfläche anliegende, durch ihre Drehbewegung die Auslaßöffnung freigebende bzw. verschließende Einrichtung, beispielsweise eine Gewindemutter, die mit einer Sicherung versehen ist. In der Schließstellung liegt die Einrichtung bzw. Gewindemutter bündig an der Stirnfläche des Rohres an. Als Sicherung für die Gewindemutter eignet sich insbesondere eine Gegenmutter.

Zum Dosieren von Schüttgut wird die Schraubenwelle in eine Drehbewegung versetzt, wobei, bedingt durch die Neigung der Stirnfläche und die komplementäre Neigung der an der Stirnfläche anliegenden Fläche der die Auslaßöffnung freigebenden bzw. verschließenden Einrichtung, die Auslaßöffnung freigegeben und bei jeder vollen Umdrehung einmal verschlossen wird. Mit dieser Drehbewegung einher geht eine axiale Relativbewegung zwischen Schraubenwelle und Vorratsbehälter, d.h. entweder die Schraubenwelle oder der Vorratsbehälter wird bei jeder Umdrehung auf- und abbewegt. Im Falle der axialen Bewegung der Schraubenwelle ist diese in dem Antriebsmotor entsprechend gelagert. Bei einer Drehbewegung der Schraubenwelle wird im Vorratsbehälter eine Vibration erzeugt, die dafür sorgt, daß das Schüttgut im Vorratsbehälter sicher in das die Schraubenwelle führende Rohr gelangt, von der Schraubenwelle erfaßt und ausgetragen werden kann. Die axiale Bewegung der Schraubenwelle bewirkt eine Abtrennung von Schüttgutpartikel aus dem Vorratsbehälter.

Bei einer der Austrittsrichtung entgegenlaufenden Drehbewegung der Schraubenwelle erfolgt in dem Spalt zwischen Rohrinnenwand und Gewindeflanken eine weitere Trennung des Schüttgutes. Durch diese Maßnahme ist auch die Dosierung von durch hohen Feuchtigkeitsgehalt zu Agglomeration neigenden Schüttgütern möglich. Die Austragung des Schüttgutes erfolgt durch die Vibrationsbewegung.

Es kann sowohl die Schraubenwelle als auch der Vorratsbehälter in eine Vibrationsbewegung versetzt werden. Diese Vibrationsbewegung ist in weiten Grenzen variierbar. Insgesamt haben sich Vibrationsbewegungen einer Frequenz von 1 bis 20 sec⁻¹ als besonders vorteilhaft erwiesen.

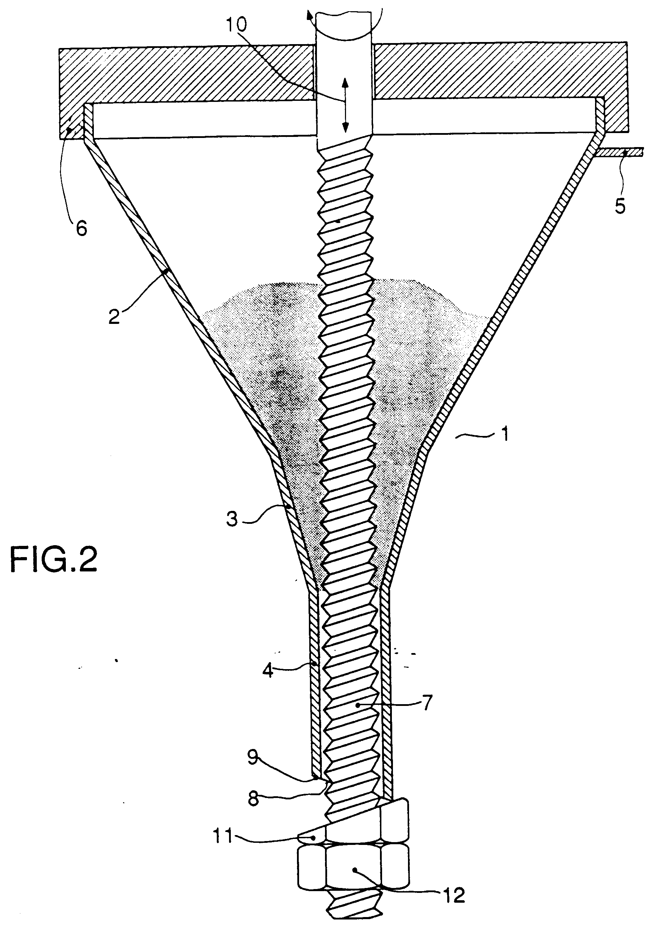

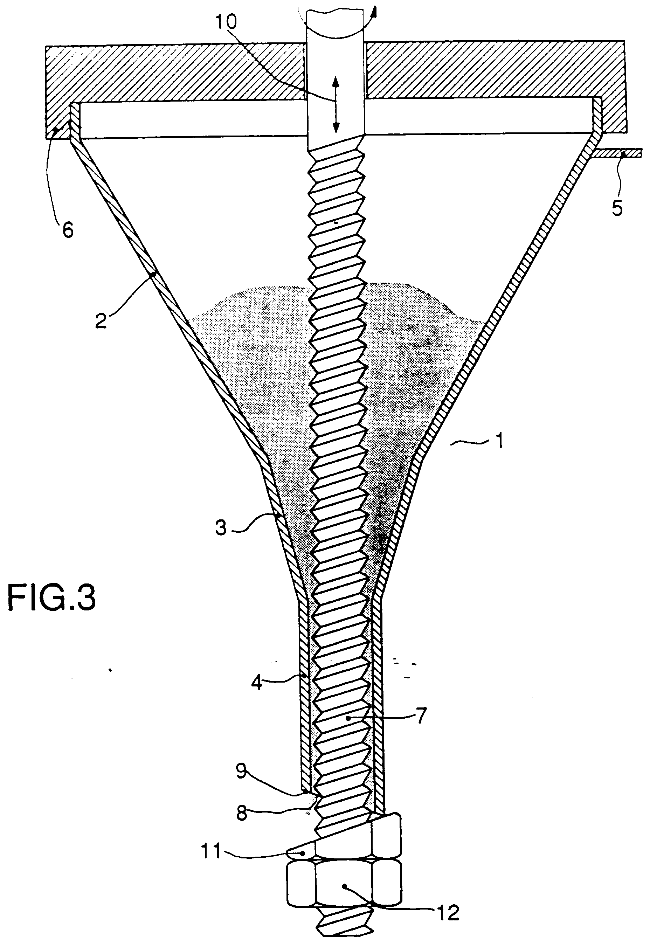

Als Schraubenwellen kommen solche mit gebräuchlichen Gewindeformen wie Rundgewinde, Sägengewinde oder Trapezgewinde in Betracht. Besonders geeignet ist eine Schraubenwelle mit metrischem Profil, wobei das Gewinde rechts- oder linksgängig sein kann. Je nach Verlauf der Schraubenlinie läßt sich in Abhängigkeit der Drehzahl und der Drehrichtung der Schraubenwelle die zu dosierende Schüttgutmenge verändern. Es wurde gefunden, daß bei einer Schraubenwelle mit metrischem Rechtsgewinde eine Rechtsdrehung der Welle (Figur 2) eine hohe Dosiergenauigkeit bei geringem Mengendurchsatz zur Folge hat. Durch eine Linksdrehung der Welle (Figur 3) ergibt sich bei gleicher Drehzahl ein höherer Mengendurchsatz und eine etwas geringere Dosiergenauigkeit. Die Durchsatzmengen und die Dosiergenauigkeit werden außerdem durch die Abmessungen der Schraubenwelle und des die Schraubenwelle führenden Rohres, insbesondere durch die Spaltweite zwischen dem Außendurchmesser der Schraubenwelle und dem Durchmesser der inneren Mantelfläche des Rohres bestimmt. Die Spaltweite beträgt im allgemeinen 0,1 bis 5 mm, vorzugsweise 0,1 bis 2 mm.

Die Erfindung wird nachfolgend unter Hinweis auf die Zeichnungen anhand eines Ausführungsbeispieles näher erläutert.

Es zeigt
- Figur 1: einen Längsschnitt einer Vorrichtung nach der Erfindung im geschlossenen Zustand,
- Figur 2: eine der Fig. 1 entsprechende Ansicht, jedoch mit der Schraubenwelle in der Dosierstellung, wobei die Schraubenwelle eine Rechtsdrehung ausführt und
- Figur 3: eine der Fig. 2 entsprechende Ansicht, jedoch mit einer linksdrehenden Schraubenwelle.

Im wesentlichen besteht die Vorrichtung aus einem Vorratsbehälter (1) für das zu dosierende Schüttgut, welcher aus zwei konischen Rohrzügen (2) und (3) mit unterschiedlichen Konuswinkeln sowie einem an den unteren Rohrzug (3) anschließenden zylindrischen Rohr (4) zusammengesetzt ist. Der Vorratsbehälter ist in einer Halterung (5) befestigt. Mit (6) ist eine mit dem oberen Rohrzug (2) lösbar verbundene Abdeckung bezeichnet, oberhalb der ein Motor befestigt ist (in den Zeichnungen nicht dargestellt). Bei dem Ausführungsbeispiel beträgt die Höhe des Vorratsbehälter etwa 60 mm, die Länge des Rohres (4) 40 mm und seine lichte Weite 8 mm.

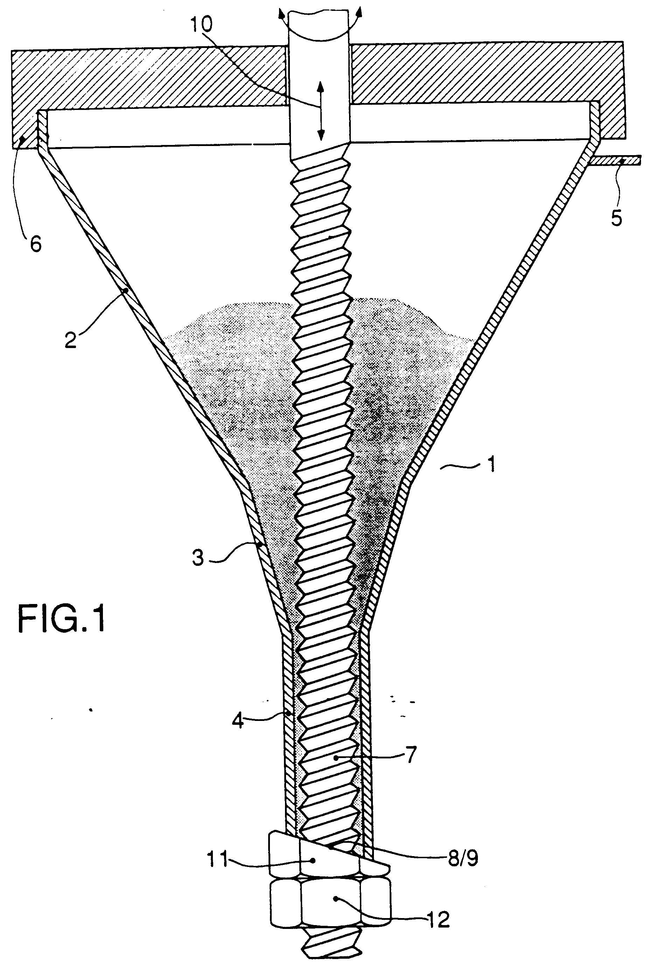

In dem Vorratsbehälter ist eine zentrale Schraubenwelle (7) mit metrischem Rechtsgewinde angeordnet. Die Schraubenwelle ist einseitig auf der Seite des Motors eingespannt und erstreckt sich durch den gesamten Vorratsbehälter. Sie greift durch die Auslaßöffnung (8) in der unter einem Winkel von 45° geneigten Stirnfläche (9) des Rohres (4) hindurch. Ihre axiale Verschiebbarkeit ist durch den Doppelpfeil (10) angedeutet. Auf dem freien, d.h. aus der Auslaßöffnung (8) herausragenden Ende der Schraubenwelle ist eine Gewindemutter (11) aufgeschraubt und durch eine Gegenmutter (12) gesichert. Die Gewindemutter (11) liegt in der Schließstellung der Vorrichtung (Figur 1) bündig an der geneigten Stirnfläche (9) des Rohres (4) an und ist hierzu entsprechend deren Neigungswinkel schräg angeschliffen.

Wird die Schraubenwelle in eine Drehbewegung versetzt, ergibt sich gleichzeitig eine axiale Auf- und Abbewegung, wodurch die Auslaßöffnung (8) abwechselnd freigegeben (Figur 2 und 3) und verschlossen wird. Bei der Dosierung eines Farbstoffpulvers mit einer mittleren Korngröße von 1 µm konnten bei einer Winkelgeschwindigkeit der Schraubenwelle (7) von 350 min⁻¹ in Abhängigkeit der Spaltweite zwischen dem Rohr (4) und der Schraubenwelle (7) und der Drehrichtung die nachstehend angegebenen Dosiermengen und -genauigkeiten erreicht werden.

| Spaltweite [mm] | Drehrichtung | Dosiermenge [g/min] | Genauigkeit |
|---|---|---|---|
| 0,10 | rechts | ca. 0,003 | +/- 0,0001 |
| 0,35 | rechts | ca. 0,01 | +/- 0,0002 |
| 2,00 | rechts | ca. 0,1 | +/- 0,0005 |
| 0,15 | links | ca. 0,01 | +/- 0,0005 |
| 0,35 | links | ca. 0,05 | +/- 0,0005 |
| 2,00 | links | ca. 0,15 | +/- 0,001 |

Die erfindungsgemäße Vorrichtung ist einfach aufgebaut und ohne besonderes handwerkliches Geschick zu montieren und demontieren. Sie kann daher sehr gut gereinigt werden, was gerade für das Dosieren unterschiedlicher Farbstoffe von herausragender Bedeutung ist. Durch entsprechende Auslegung ist die Vorrichtung sowohl für das Dosieren kleiner Schüttgutmengen als auch für sehr große Dosiermengen geeignet.

## Patentansprüche

1. Vorrichtung zum Dosieren von pulverförmigem Schüttgut, insbesondere von Farbstoffpulver, mit einem Vorratsbehälter (1) für das Schüttgut, der in seinem unteren Bereich eine verschließbare Auslaßöffnung (8) hat, und einem in dem Vorratsbehälter angeordneten, einseitig auf der Seite eines Motors eingespannten, drehantreibbaren Rührorgan, dadurch gekennzeichnet, daß der untere Bereich des Vorratsbehälters (1) aus einem Rohr (4) besteht, dessen freie Stirnfläche (9) gegenüber der Horizontalebene geneigt ist, und daß das Rührorgan als axial verschiebbare Schraubenwelle (7) ausgebildet ist, die durch das Rohr (4) hindurchgreift und auf ihrem freien Ende eine in der Schließstellung bündig an der Stirnfläche (9) anliegende und durch ihre Drehbewegung die Auslaßöffnung (8) freigebende bzw. verschließende Einrichtung (11, 12) trägt.

2. Vorrichtung nach Anspruch 1, dadurch gekennzeichnet daß der Neigungswinkel der freien Stirnfläche (9) des Rohres (4) gegenüber der Horizontalebene etwa 3° bis etwa 70° beträgt.

3. Vorrichtung nach Anspruch 1, dadurch gekennzeichnet, daß der Vorratsbehälter (1) oder die Schraubenwelle (7) in eine Vibrationsbewegung mit einer Frequenz von 1 bis 20 sec⁻¹ versetzbar ist.

4. Vorrichtung nach Anspruch 1, dadurch gekennzeichnet, daß die Drehzahl der Schraubenwelle (7) veränderbar ist.

5. Vorrichtung nach Anspruch 1, dadurch gekennzeichnet, daß die Drehrichtung der Schraubenwelle (7) veränderbar ist.

6. Vorrichtung nach Anspruch 1, dadurch gekennzeichnet, daß die Einrichtung zum Freigeben bzw. Verschließen der Auslaßöffnung (8) aus einer Gewindemutter (11) mit einer Sicherung (12) besteht.

## Claims

1. An apparatus for proportioning powdered bulk material, in particular powdered colorant, comprising a reservoir (1) for the bulk material, which in its lower region has a sealable outlet port (8) and further comprising a rotationally drivable stirring element which is located in the reservoir and is clamped unilaterally on the side of a motor, wherein the lower region of the reservoir (1) comprises a tube (4) whose free end face (9) is inclined with respect to the horizontal plane, and wherein the stirring element is designed as an axially displaceable screw shaft (7) which extends through and beyond the tube (4) and at its free end carries a device (11, 12), which in the sealing position lies flush against the end face (9) and, by virtue of its rotary movement, clears or seals the outlet port (8).

2. An apparatus as claimed in claim 1, wherein the slope of the free end face (9) of the tube (4) with respect to the horizontal plane is from about 3° to about 70°.

3. An apparatus as claimed in claim 1, wherein the reservoir (1) or the screw shaft (7) can be set in vibratory motion having a frequency of from 1 to 20 sec⁻¹.

4. An apparatus as claimed in claim 1, wherein the rotational speed of the screw shaft (7) can be varied.

5. An apparatus as claimed in claim 1, wherein the direction of rotation of the screw shaft (7) can be varied.

6. An apparatus as claimed in claim 1, wherein the device for clearing or sealing the outlet port (8) comprises a threaded nut (11) with a retainer (12).

## Revendications

1. Appareillage pour le dosage de produit en vrac pulvérulent, en particulier de poudre de colorants, avec un réservoir de stockage (1) pour le produit en vrac qui a dans sa zone inférieure une ouverture d'évacuation obturable (8) et avec un organe d'agitation orientable, disposé dans le réservoir de stockage et monté latéralement sur le côté d'un moteur, caractérisé par le fait que la zone inférieure du réservoir de stockage (1) consiste en un tube (4), dont la face frontale libre (9) est inclinée par rapport au plan horizontal, et que l'organe d'agitation a la forme d'un arbre fileté (7) mobile axialement, qui traverse le tube (4) et porte à son extrémité libre un dispositif (11, 12) situé en position fermée en affleurement avec la surface frontale (9) et libérant ou fermant respectivement l'ouverture d'évacuation (8) par son mouvement de rotation.

2. Appareillage selon la revendication 1, caractérisé par le fait que l'angle d'inclinaison de la surface frontale libre (9) du tube (4) vaut par rapport au plan horizontal environ 3° à environ 70°.

3. Appareillage selon la revendication 1, caractérisé par le fait que le réservoir de stockage (1) ou l'arbre fileté (7) peut être animé d'un mouvement de vibration ayant une fréquence de 1 à 20 s⁻¹.

4. Appareillage selon la revendication 1, caractérisé par le fait que la vitesse de rotation de l'arbre fileté (7) est ajustable.

5. Appareillage selon la revendication 1, caractérisé par le fait que la direction du mouvement de rotation de l'arbre fileté (7) est ajustable.

6. Appareillage selon la revendication 1, caractérisé par le fait que le dispositif respectivement pour la libération ou l'obturation de l'ouverture d'évacuation (8) consiste en un écrou taraudé (11) muni d'une sécurité (12).
